# EUROPEAN PATENT SPECIFICATION

(11) **EP 3 718 042 B1**
(45) Date of publication and mention of the grant of the patent: **10.09.2025**
(21) Application number: 18833112.8
(22) Date of filing: 26.11.2018
(51) Int. Cl.: G06F 21/53, H04L 9/00, H04L 9/32

(54) **COMPUTER-IMPLEMENTED SYSTEMS AND METHODS FOR ENHANCED BITCOIN WALLETS**
COMPUTERIMPLEMENTIERTE SYSTEME UND VERFAHREN FÜR ERWEITERTE BITCOIN-GELDBÖRSEN
SYSTÈMES ET PROCÉDÈS MIS EN OEUVRE PAR ORDINATEUR POUR PORTEFEUILLES BITCOIN AMÉLIORÉS

(30) Priority: 30.11.2017 GB 201719947; 30.11.2017 WO PCT/IB2017/057540
(43) Date of publication of application: 07.10.2020
(73) Proprietor: nChain Licensing AG, 6300 Zug (CH)
(72) Inventor: WRIGHT, Craig Steven, Cardiff CF10 2HH (GB)
(74) Representative: Murgitroyd & Company
(86) International application number: PCT/IB2018/059282
(87) International publication number: WO 2019/106512

(56) References cited:
- WO-A1-2017/145019
- US-A1- 2017 011 460
- FAN ZHANG ET AL: "Town Crier: An Authenticated Data Feed for Smart Contracts", INTERNATIONAL ASSOCIATION FOR CRYPTOLOGIC RESEARCH,, vol. 20160330:013429, 19 February 2016 (2016-02-19), pages 1 - 23, XP061020462

## Description

This invention relates generally to distributed ledger (blockchain) technologies and, more particularly, to using such technologies to execute or trigger a computer-implemented process. The invention also relates to digital wallet technologies and smart contracts. It relates to secure performance of processes which are enforced through cryptographically-oriented events.

In this document we use the term 'blockchain' to include all forms of electronic, computer-based, distributed ledgers. These include consensus-based blockchain and transaction-chain technologies, permissioned and un-permissioned ledgers, shared ledgers and variations thereof. The most widely known application of blockchain technology is the Bitcoin ledger, although other blockchain implementations have been proposed and developed. While Bitcoin may be referred to herein for the purpose of convenience and illustration, it should be noted that the invention is not limited to use with the Bitcoin blockchain and alternative blockchain implementations and protocols fall within the scope of the present invention. The term "Bitcoin" may include any branch, version or variation of the Bitcoin blockchain. The term "user" may refer herein to a human or a processor-based resource, as dependent upon context.

A blockchain is a peer-to-peer, electronic ledger which is implemented as a computer-based decentralised, distributed system made up of blocks which in turn are made up of transactions. Each transaction is a data structure that encodes the transfer of control of a digital asset between participants in the blockchain system, and includes at least one input and at least one output. Each block contains a hash of the previous block to that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid and the transaction is written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

Although blockchain technology is most widely known for the use of cryptocurrency implementation, digital entrepreneurs have begun exploring the use of both the cryptographic security system Bitcoin is based on and the data that can be stored on the Blockchain to implement new systems. It would be highly advantageous if the blockchain could be used for automated tasks and processes which are not limited to the realm of cryptocurrency. Such solutions would be able to harness the benefits of the blockchain (e.g. a permanent, tamper proof records of events, distributed processing etc) while being more versatile in their applications.

One area of current research is the use of the blockchain for the implementation of "smart contracts". These are computer programs designed to automate the execution of the terms of a machine-readable contract or agreement. Unlike a traditional contract which would be written in natural language, a smart contract is a machine executable program which comprises rules that can process inputs in order to produce results, which can then cause actions to be performed dependent upon those results.

One known approach to the performance and enforcement of smart contracts is to use a bot, or a network of bots which serve as computer-based resources to handle and oversee the events which need to be performed in compliance with the contract. However, this involves reliance upon third party bots and can lead to a complex, resource-intensive infrastructure. Security issues can arise because the bots themselves have to be secured against malicious and unauthorised activity. Thus, it is desirable to provide an enhanced blockchain-implemented solution which inherits the benefits of blockchain technology (eg cryptographic security, pseudo anonymity, decentralised deployment etc) and allows events and processes to be generated under specific conditions. It should be noted that the invention is not limited for use with smart contracts, but can be used to advantage in relation to contexts which require one or more events to be performed and/or triggered under controlled conditions.

WO 2017/145019 A1 relates to the fields of tokenisation, blockchain and smart contract technologies. It provides a technical arrangement which simplifies the automated management of contracts. The invention comprises a method and system which use a computer-based repository for storage of the contract. The contract is then represented by a transaction on the blockchain. Metadata within the transaction's script includes a hash of the contract and a means of identifying its location within the repository. The transaction also includes an unspent output (UTXO) which indicates its status as an open (ie not terminated) contract. The contract is terminated by spending the output at a later point in time, for example, using n Lock Time + Check Lock Time Verify (CLTV). By combining this concept with other techniques and computing components, the invention can provide a powerful mechanism for implementing various tasks such as renewing or rolling over the contract, or dividing it into sub-contracts or conditions. Furthermore, as the status and existence of the contract is evidence via the blockchain, this provides a permanent, publicly visible and non-alterable record of the contract.

In accordance with the present invention there is provided a solution as defined in the appended claims.

The invention may be described as a computer implemented and/or blockchain implemented system and method. Additionally or alternatively, it may be described as a security method for controlling when and/or how an event or process is triggered by a blockchain transaction, preferably by a blockchain script. Additionally or alternatively, the invention may be described as an enhanced or improved digital wallet. It may be described as providing a smart or intelligent digital wallet. Preferably, this is a smart cryptocurrency wallet.

Additionally or alternatively, the invention may be described as providing a system/method for integrating cryptographic events on a blockchain with events and processes conducted off-block. It may provide an alternative infrastructure and architecture, comprising a blockchain network and non-blockchain resources, for the execution of tasks. The tasks may be specified by a contract, preferably a smart contract.

In accordance with the invention, there may be provided a blockchain-implemented system comprising:
a process execution component arranged to recognise one or more codified instructions provided in or by a script of a blockchain transaction, the process execution component being embedded in, associated with or operable with a blockchain transaction processing component.

Additionally or alternatively, the invention may provide a blockchain-implemented system comprising:
a blockchain transaction processing component ; and
a process execution component.

The blockchain transaction processing component may be a software resource which is arranged to generate, transmit and/or process a blockchain transaction (Tx). It may be arranged for communication with a blockchain network. It may be, or may comprise, a digital wallet. Hereafter, for the sake of convenience, the terms "digital wallet", "cryptocurrency wallet" or simply "wallet" may be used interchangeably with "blockchain transaction processing component".

The process execution component may be embedded within, associated with, or arranged to interact/operate with the digital wallet. It may be arranged to execute and/or initiate at least one process in response to at least one trigger associated with or provided in a script for a blockchain transaction. The trigger may be an actuator or initiator, something which causes something else to happen. That "something", i.e the process that is triggered may be distinct from, independent of or unrelated to the transaction, other than that it carries the trigger.

Thus, the present invention represents a divergence from prior art techniques which attempt to provide execution logic within the script by explicitly programming it using the script language. By contrast, in accordance with one or more embodiments of the invention, the logic is only codified within the script.

Another advantage of the present invention is that the use of the wallet-embedded/associated interpreter means that no external, third party "bots" or "oracles" are required in order to perform the desired task, as per prior art arrangements. Instead, the invention enables the execution of the task/process directly from the blockchain. Thus, fewer computing resources are required, and the invention provides a more efficient solution that that offered by the prior art.

The trigger may be a script component which can be identified or detected by the process execution component. The trigger may take a variety of forms and the invention is not limited in this regard. It may be one or more codes, identifiers, flags, keywords, values or any item(s) that can be inserted into the metadata to serve as a designated trigger that can be understood, interpreted by the process execution component.

Execution of the process may result in performance of a task, or may cause another computing resource to perform a task in response to detection of or processing of the trigger. Preferably, the process is performed by a resource other than the wallet.

The script may comprise one or a plurality of triggers. Each trigger may initiate one or a plurality of processes. The term "event" or "task" may be used sometimes herein instead of "process". The trigger may comprise one or more codified instructions.

The script may be a locking script arranged to secure an output in a blockchain transaction, as known in the art. The locking script may comprise a hash of a redeem script, as known in the art. An appropriate unlocking script is required to unlock the funds locked by the locking script. The unlocking script may be provided by the wallet. The unlocking and locking scripts may be evaluated upon attempting to spend the output, in accordance with the art.

The blockchain transaction may be a transaction arranged for execution on any blockchain platform, including the Bitcoin network, any variation of the Bitcoin protocol, or an alternative protocol/platform. The wallet may be a cryptocurrency wallet. It may be arranged to store cryptographic keys, and process cryptocurrency transactions.

The at least one trigger may be arranged to initiate execution of the one or more processes by the process execution component. The at least one trigger may comprise one or more codes and/or parameters. The trigger may be or provide codified instructions which are readable, recognisable and/or detectable by the process execution component.

The process execution component may be, or may comprise, an interpreter. It may be or comprise a Virtual Machine. Hereafter, the term "interpreter" may be used interchangeably with "process execution component" for ease of reference. The interpreter may be arranged to translate codified instructions provided by or represented by the trigger into executable logic. Execution of the executable logic may cause the process to be initiated and/or executed.

The interpreter may be arranged to serve as a plug-in or add-on component to the wallet. The wallet may be a generic digital wallet as described below, and/or the interpreter may be a task, contract or application specific component which is arranged to operate in conjunction with wallet. Thus, in one sense, the wallet may be seen as a general purpose computing resource and the interpreter may be seen as the application software arranged to operate with that generic resource.

The wallet may be installed on an electronic device operated by a user. The user may be an entity (human being or computing resource) capable of operating the wallet and being associated with the wallet eg via a registration process. The user may be authorised to operate the wallet and may undergo a verification process prior to being allowed access to the wallet.

The codes, parameters, variables and/or instructions provided in the transaction script causes the application software to execute and in a specific manner. Thus, the invention can be viewed as providing a secure, powerful and versatile blockchain-implemented computing tool which can be used to automate and execute a task via the use of cryptographically enforced blockchain transactions and transfers.

The at least one trigger may cause a signal to be sent to a destination external to the wallet and/or interpreter. The signal may be any type of signal. It may comprise a message of some type. The signal may be sent to an off-block destination.

The process may be pre-determined and known to (coded or otherwise provided within) the process execution component. It may be known to the wallet.

The process may be determined by, or specified within, the script. The process execution component may be arranged to translate or interpret one or more items within the script into executable logic. These items can take a variety of forms. They may be codes, flags, instructions, parameters etc.

The at least one trigger and/or at least one process may be selected or determined in accordance with a contract, scheme, agreement or other activity. A user of the wallet and/or interpreter may be a participant in the contract, scheme agreement or other activity. The contract may be a machine readable and executable smart contract as known in the art.

The at least one trigger may be provided within, via or by metadata that is provided within the script. The script may be associated with an output of the blockchain transaction. It may be a locking script. It may comprise a redeem script. Spending of the output may cause or perform the transfer of a token and/or portion of currency to a recipient on the blockchain. The currency may be a cryptocurrency.

The system may further comprise a plurality of digital wallets and/or process execution components. Thus, a network of wallets and associated interpreters may be provided. These may be arranged to interact with each other and/or the blockchain.

The invention also provides one or more methods. The methods may comprise steps corresponding to the use of system embodiments as described above. Any feature(s), aspects or embodiments described above may be present in or applicable to any of the methods described below.

The invention may comprise a blockchain-implemented method comprising the step of:
providing a process execution component embedded within, associated with, or arranged to interact/operate with a digital or cryptocurrency wallet and arranged to initiate and/or execute at least one process in response to at least one trigger associated with or provided in a script for a blockchain transaction.

Preferably,
i) the at least one trigger is arranged to initiate execution of the one or more processes by the process execution component;
ii) the at least one trigger comprises one or more codes, instructions, flags and/or parameters
iii) the process execution component is an interpreter;
iv) the trigger comprises at least one codified instruction; and/or
v) the at least one trigger causes a signal to be sent to a destination external to the wallet.

The process execution component may be an interpreter as described above.

Additionally or alternatively:
i) the process is pre-determined and known to the process execution component and/or wallet;
ii) the process is determined by, or specified within, the script, preferably wherein the process execution component is arranged to translate or interpret one or more items within the script into executable logic;
iii) the at least one trigger and/or at least one process is selected or determined in accordance with a contract, preferably a smart contract;
iv) the at least one trigger is provided within or by metadata that is provided within the script; and/or
v) the script is associated with an output of the blockchain transaction, and spending of the output causes transfer of a token and/or portion of currency to a recipient on the blockchain.

The method may comprise the step of
downloading and/or installing the digital wallet; and/or
downloading and/or installing the process execution component.

Additionally or alternatively, the invention may provide a blockchain-implemented method comprising the step of:
using one or more codified instructions provided in or by a script of a blockchain transaction to cause an interpreter associated with, operable with or embedded within, a digital wallet to translate the codified instruction(s) into executable logic.

The method may further comprise the step of:
Providing the codified instruction(s) in the script; and/or
Submitting the blockchain transaction to a blockchain network to be written to a blockchain ledger.

It may further comprise the step of:
i) Arranging an interpreter to recognise one or more codified instructions provided in or by a script of a blockchain transaction, the interpreter being embedded in, associated with or operable with a digital wallet; or
ii) providing an interpreter as defined in i)

These and other aspects of the present invention will be apparent from and elucidated with reference to, the embodiment described herein. An embodiment of the present invention will now be described, by way of example only, and with reference to the accompany drawings, in which:
Figure 1 illustrates an embodiment of the present invention in which smart contract logic is managed by specialised, enhanced wallets.
Figure 2 illustrates an example blockchain network of nodes as is known in the prior art.
Figure 3 illustrates, in block diagram form, an example node.

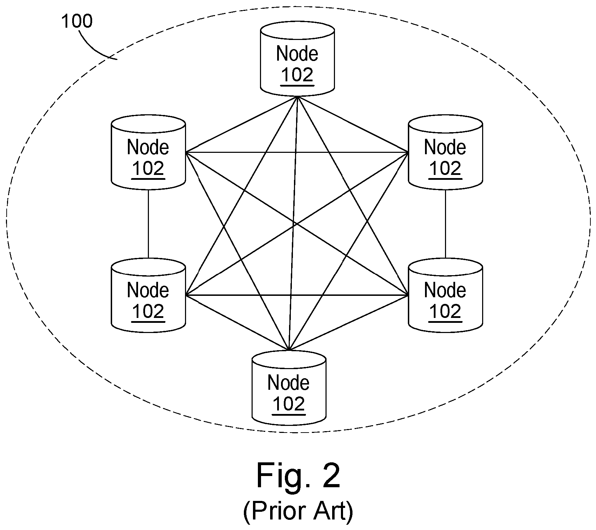

To provide the technical context of the invention, reference will first be made to Figure 2 which illustrates, in block diagram form, an example blockchain network 100 associated with a blockchain. The blockchain network is a peer-to-peer network which may be joined by anyone, without invitation or without consent from other members. Distributed electronic devices running an instance of the blockchain protocol under which the blockchain network 100 operates may participate in the blockchain network 100. Such distributed electronic devices may be referred to as nodes 102. The blockchain protocol may be a Bitcoin protocol, or other cryptocurrency, for example.

The electronic devices that run the blockchain protocol and that form the nodes 102 of the blockchain network 100 may be of various types including, for example, computers such as desktop computers, laptop computers, tablet computers, servers, mobile devices such a smartphones, wearable computers such as smart watches or other electronic devices.

Nodes 102 of the blockchain network 100 are coupled to one another using suitable communication technologies which may include wired and wireless communication technologies. In many cases, the blockchain network 100 is implemented at least partly over the Internet, and some of the individual nodes 102 may be located in geographically dispersed locations.

Nodes 102 maintain a global ledger of all transactions on the blockchain. The global ledger is a distributed ledger and each node 102 may store a complete copy or a partial copy of the global ledger. Transactions by a node 102 affecting the global ledger are verified by other nodes 102 so that the validity of the global ledger is maintained. The details of implementing and operating a blockchain network, such as one using any variant derived from the Bitcoin protocol or an alternative protocol, will be appreciated by those ordinarily skilled in the art.

Each transaction typically has one or more inputs and one or more outputs. Scripts embedded into the inputs and outputs specify how and by whom the outputs of the transactions can be accessed. The output of a transaction may be an address to which control of private cryptographic keys and tokens can be transferred as a result of the transaction. Those keys/tokens are then associated with that output address as an available transaction output. In the context of a cryptocurrency, like Bitcoin, an available transaction output may be referred to as an unspent transaction output (UTXO). A subsequent transaction may then reference that address as an input in order to transfer those keys/tokens to one or more other addresses.

Nodes 102 may be of different types or categories, depending on their functionality. It has been suggested that there are four basic functions associated with a node 102: wallet, mining, full blockchain maintenance, and network routing. There may be variations of these functions. Nodes 102 may have more than one of the functions. For example, a "full node" offers all four functions. A lightweight node, such as may be implemented in a digital wallet, for example, and may feature only wallet and network routing functions. Rather than storing the full blockchain, the digital wallet may keep track of block headers, which serve as indexes when querying blocks. Nodes 102 communicate with each other using a connection-oriented protocol, such as TCP/IP (Transmission Control Protocol).

We now turn our attention to embodiments of the present invention, which utilise and interact with this blockchain technology.

Embodiments of the present invention provide a solution in which processes can be automated via the use of a blockchain. The invention incorporates a software resource which is arranged to respond to or interact with scripts provided within blockchain transactions (TXs). In a preferred embodiment, the software resource is a digital wallet. In particular, the wallet is arranged to store, enact, generate or otherwise process cryptocurrency and related transactions. Hereafter, the terms "wallet" or "digital wallet" will be used interchangeably for convenience. While digital wallets are known in the art, the present invention improves upon such technologies to provide a "smart wallet" which is capable of providing much wider functionality than presently known, in conjunction with a blockchain network and protocol.

In a preferred embodiment, the invention provides an arrangement which enables one or more processes to be executed by an enhanced wallet that has a code execution component embedded within it or added to it as an extension. Hereafter, we will refer to this as "the interpreter", interpreters being known in the art as mechanisms for code translation and execution.

In accordance with embodiments of the invention, the interpreter is able to initiate and/or execute processes that are triggered by codified instructions provided in blockchain transaction scripts. The script is associated with an output (UTXO) in a blockchain transaction (Tx), and is a locking script. The locking script may comprise the hash of a redeem script as known in the art, such that the correct redeem script must be provided to the unlocking script in order to spend the output.

In one embodiment, a network of such enhanced wallets comprises an execution environment for smart contracts implemented in the form of codified instructions embedded within scripts. That is, a script might contain codes, instructions, variables and parameters that trigger wallets to execute certain processes.

For example, consider known, contractual situations in which a payment serves as the trigger for an event to occur, such as the commencement of a piece of building work, or the unlocking of a device, or the release of some digital content such as media content or software, or a transfer of funds, or anything else that is specified by the contract.

Advantageously, we can implement such events using the enhanced smart wallet provided by the present invention. As is known in the art, when an output in a blockchain transaction is spent, control of the cryptocurrency associated with that output is transferred from one party to another. Spending of the output can also cause the transfer of a token, which may be embedded within the transaction script. The recipient of the transfer can be an enhanced wallet in accordance with the invention.

However, this can be extended such that a blockchain transaction which makes such a transfer could also be coded to include a trigger for the ensuing, associated event. The event may be executed in part or entirety by the enhanced wallet/interpreter itself or it may simply be initiated by the wallet e.g. by sending a signal to a destination to cause execution of the event by another resource. In some embodiments, this event could be an off-block event.

So, in other words, a transfer on the blockchain from one party to another causes at least one other event to be initiated and/or executed by the enhanced wallet.

The invention is not limited by the type of event (process) that can be triggered. However, by way of a simple example, it could be the transmission of some kind of signal such as an email that alerts a builder that payment has been made and work can commence. In another example, a signal can be sent which causes a device or resource to be unlocked. Thus, the invention can serve as an authentication or security solution. Note that these simple examples are for illustration only.

The triggered event(s) might be predictable in that they could be standardised processes that only need a trigger to initiate execution. Alternatively, the process to be executed is codified within the script and the wallet's Interpreter is arranged to translate the codified instruction(s) into executable logic. When a transaction is broadcast throughout the blockchain network as part of the normal protocol, the enhanced wallets can read any embedded codified instructions and execute them as an enhanced, extended functionality i.e. functionality beyond the normal transaction processing that known wallets can perform. In one sense, then, a wallet arranged in accordance with the invention is extended from being solely a payment processing and handling resource into a multi-purpose, computing facility. When used in conjunction with the performance of smart contracts, the invention becomes a powerful, versatile computing tool with much wider applicability than just traditional wallet-based storage and processing.

As the invention serves as an extension to existing, known wallets, it can be regarded in one sense as providing a new paradigm for software distribution. The invention can be added to an existing wallet to provide the extended functionality. This could be thought of as a "plug in". The interpreter can be downloaded and installed on a computing resource and associated with an existing wallet, or it can be provided as an embedded component which is provided within the wallet rather than installed as an extension. In the case of the latter, the extension may interface with the wallet using an API. The interpreter can be arranged and configured to perform tasks(s) required or desired by the user in accordance with a contract, agreement, scheme, network etc that they are a participant in.

Beneficially, the invention provides a solution which does not need to rely on third parties to execute automated bots for smart contract performance and event handling via the blockchain. Also, the present invention requires a less complex infrastructure than a network of bots, and is also suitable for executing multiply-realisable processes.

The invention can also be used to advantage to form a network of enhanced wallets, which can interact with one another to perform sophisticated behaviours and tasks. In such an Enhanced Wallet network the executed logic is most likely not explicit and is executable by any of the resources. The information required for the execution logic is provided and transmitted within the (e.g. Bitcoin) script as codified triggers that are detected and responded to by the interpreters within the network's wallets.

### Use Case Example:

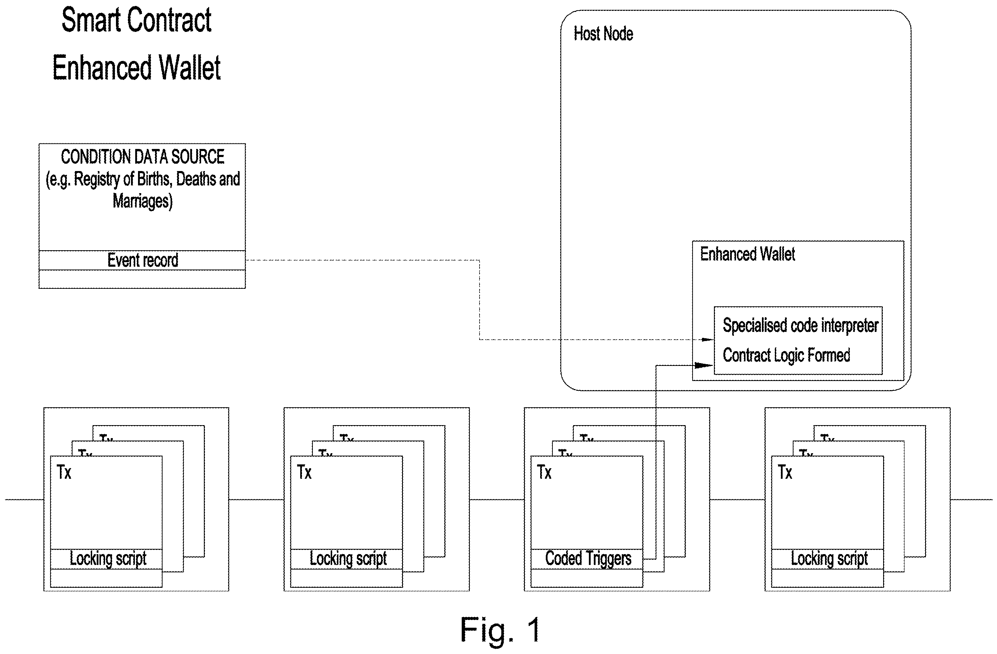

Consider the following scenario as an illustrative use case for enhanced wallets in accordance with one embodiment of the invention, and with reference to Figure 1.

In this example, a manager or controller distributes a generic Enhanced Wallet to willing recipients. These recipients could be referred to as "hosts", "clients" or "users". They may be computers upon which the invention can be installed and executed. This is illustrated as the "host node" 1 in figure 1. For convenience we will call this the "Smart Wallet" 2. This Smart Wallet does not perform any intelligent or extended functionality, and does not respond to any triggers as it serves simply as a core, generic cryptocurrency wallet that can be used to store and handle blockchain transactions. In order to extend the functionality of the base Smart Wallet, the user installs one or more Smart Wallet plug-ins 3 designed to generate and/or execute logic. Upon provision of the plug in 3, the generic wallet 2 now comprises an interpreter which provides intelligent capabilities to the wallet. These plug ins can be provided with, or separately from, the base Smart Wallet 2. The Smart Wallet is capable of interaction and integration with the plug in(s) and vice versa. The plug in(s) respond to a particular, predetermined set of triggers 4 provided within locking scripts 5 of blockchain transactions (TXs) 6 to execute specific process(es) in accordance with a given task. As the Smart Wallet 2 and the plug ins 3 are designed to work in conjunction with the blockchain, the invention inherits all the benefits of the underlying infrastructure of the Blockchain i.e. cryptographic security; pseudonymity; robustness; etc.

For example, one wallet plug in could be a pharmacy application. In this example scenario, the doctor writes a prescription for a particular patient who is allowed exactly three repeats. To prevent abuse, it is important that the prescription is not forged; that only the intended recipient receives the medication; and that everything is securely trackable so that (for example) only the allowed number of repeats are filled. The prescription is written into a Bitcoin transaction 6 as metadata in the locking script 5 of a UTXO using tokenisation techniques known in the art, and signed by the doctor. This may be a digital signature. This locks the output to the desired recipient. The metadata includes codified triggers 4 for the Pharmacy plug in 3. The pharmacy has installed the Smart Wallet 2 and this plug in 3 on their server 1.

When the recipient presents the prescription to the pharmacy, the transaction output is 'spent' in the conventional way i.e. the tokenised prescription is 'redeemed' at the pharmacy, and perhaps also contains the payment for the actual cost of the medication, possibly in cryptocurrency. In addition to redeeming the token at the pharmacy, the wallet plug in executes a range of associated processes. For example, it updates a government database 7 of prescriptions being filled (who prescribed it; for whom; filled by which pharmacist; for which drugs; etc.); it updates the recipient's (Blockchain-based) medical records 7; etc.

The skilled person will readily appreciate that any number of associated processes can be automated based on the metadata. For example, the prescription itself can be prepared ahead of time by the pharmacist and simply picked up by the recipient rather than the recipient needing to wait at the pharmacy (as per the conventional, paper-based paradigm).

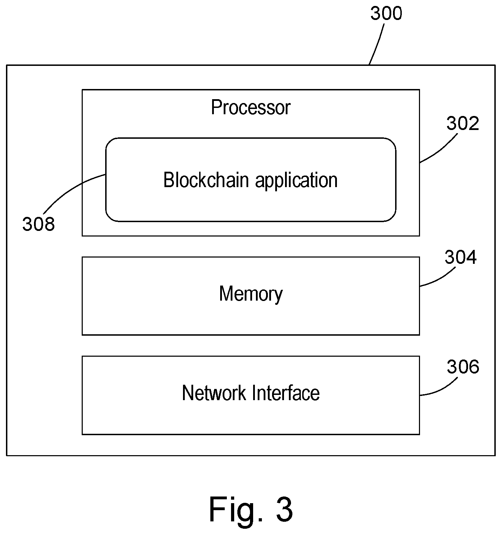

Reference will now be made to figure 3, which shows, in block diagram form, a simplified example of a node 300, which may, in the context of the present disclosure, be a host node. The node 300 includes a processor 302, which may include one or more microprocessors, application specific integrated chips (ASICs), microcontrollers, or similar computer processing devices. The node 300 further includes memory 304, which may include persistent and non-persistent memory, to store values, variables, and in some instances processor-executable program instructions, and a network interface 306 to provide network connectivity over wired or wireless networks.

The node 300 includes a processor-executable blockchain application 308 containing processor-executable instructions that, when executed, cause the processor 302 to carry out one or more of the functions or operations described herein.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A blockchain-implemented system comprising:
a digital wallet; and
a process execution component embedded within the digital wallet and arranged to execute and/or initiate at least one process in response to at least one trigger provided in a script associated with a blockchain transaction;
wherein the process execution component is and/or comprises an interpreter arranged to translate codified instructions provided by or represented by the trigger into executable logic;
wherein the script is associated with an output of the blockchain transaction, and spending of the output causes transfer of a token and/or portion of currency to a recipient on the blockchain;
wherein the at least one trigger causes a signal to be sent to an off-block destination to cause an off-block event to be executed in addition to the transfer of the token and/or portion of currency.

2. The system according to claim 1 wherein:
the wallet is a cryptocurrency wallet.

3. The system according to claim 1 or 2 wherein:
the at least one trigger comprises one or more codes, flags, instructions and/or parameters.

4. The system according to any preceding claim wherein:
the process is pre-determined and known to the process execution component and/or wallet.

5. The system according to any preceding claim wherein:
the process is determined by, or specified within, the script, preferably wherein the process execution component is arranged to translate or interpret one or more items within the script into executable logic.

6. The system according to any preceding claim wherein:
the at least one trigger and/or at least one process is selected or determined in accordance with a contract, preferably wherein the contract is a smart contract.

7. The system according to any preceding claim wherein:
the at least one trigger is provided within or by metadata that is provided by the script.

8. The system according to any preceding claim wherein:
the system further comprises a plurality of digital wallets and/or process execution components.

9. A blockchain-implemented method comprising the step of:
Providing a process execution component embedded within a digital or cryptocurrency wallet and arranged to execute at least one process in response to at least one trigger associated with or provided in a script of a blockchain transaction; wherein the process execution component is and/ or comprises an interpreter arranged to translate codified instructions provided by or represented by the trigger into executable logic;
wherein the script is associated with an output of the blockchain transaction, and spending of the output causes transfer of a token and/or portion of currency to a recipient on the blockchain; and
wherein the at least one trigger causes a signal to be sent to an off-block destination to cause an off-block event to be executed in addition to the transfer of the token and/or portion of currency.

10. The method according to claim 9 wherein:
i) the at least one trigger is arranged to initiate execution of the one or more processes by the process execution component;
ii) the at least one trigger comprises one or more codes, instructions, flags and/or parameters.

11. The method according to claim 9 or 10 wherein:
i) the process is pre-determined and known to the process execution component and/or wallet;
ii) the process is determined by, or specified within, the script, preferably wherein the process execution component is arranged to translate or interpret one or more items within the script into executable logic;
iii) the at least one trigger and/or at least one process is selected or determined in accordance with a contract, preferably a smart contract;
iv) the at least one trigger is provided within or by metadata that is provided within the script.

12. The method according to claims 9 to 11 and further comprising the step of:
downloading and/or installing the digital wallet; and/or
downloading and/or installing the process execution component.

## Patentansprüche

1. Ein Blockchain-implementiertes System, das Folgendes beinhaltet:
ein digitales Wallet; und
eine Prozessausführungskomponente, die in das digitale Wallet eingebettet ist und eingerichtet ist, um als Reaktion auf mindestens einen Auslöser, der in einem mit einer Blockchain-Transaktion assoziierten Skript bereitgestellt wird, mindestens einen Prozess auszuführen und/oder zu initiieren;
wobei die Prozessausführungskomponente ein Interpreter ist und/oder einen Interpreter beinhaltet, der eingerichtet ist, um kodierte Anweisungen, die durch den Auslöser bereitgestellt oder dargestellt werden, in ausführbare Logik zu übersetzen;
wobei das Skript mit einem Output der Blockchain-Transaktion assoziiert ist und das Ausgeben des Outputs einen Transfer eines Tokens und/oder eines Währungsanteils an einen Empfänger auf der Blockchain bewirkt;
wobei der mindestens eine Auslöser das Senden eines Signals an eine blockferne Zieladresse bewirkt, um zusätzlich zu dem Transfer des Tokens und/oder des Währungsanteils das Ausführen eines blockfernen Ereignisses zu bewirken.

2. System gemäß Anspruch 1, wobei:
das Wallet ein Kryptowährungswallet ist.

3. System gemäß Anspruch 1 oder 2, wobei:
der mindestens eine Auslöser ein oder mehrere Codes, Flags, Anweisungen und/oder Parameter beinhaltet.

4. System gemäß einem der vorhergehenden Ansprüche, wobei:
der Prozess vorgegeben und der Prozessausführungskomponente und/oder dem Wallet bekannt ist.

5. System gemäß einem der vorhergehenden Ansprüche, wobei:
der Prozess durch das Skript festgelegt oder spezifiziert wird, wobei die
Prozessausführungskomponente vorzugsweise eingerichtet ist, um ein oder mehrere Elemente innerhalb des Skripts in ausführbare Logik zu übersetzen oder zu interpretieren.

6. System gemäß einem der vorhergehenden Ansprüche, wobei:
der mindestens eine Auslöser und/oder der mindestens eine Prozess gemäß einem Vertrag ausgewählt oder festgelegt wird, wobei der Vertrag vorzugsweise ein Smart Contract ist.

7. System gemäß einem der vorhergehenden Ansprüche, wobei:
der mindestens eine Auslöser innerhalb von oder durch Metadaten, die durch das Skript bereitgestellt werden, bereitgestellt wird.

8. System gemäß einem der vorhergehenden Ansprüche, wobei:
das System ferner eine Vielzahl von digitalen Wallets und/oder Prozessausführungskomponenten beinhaltet.

9. Ein Blockchain-implementiertes Verfahren, das die folgenden Schritte beinhaltet:
Bereitstellen einer Prozessausführungskomponente, die in ein digitales oder Kryptowährungs-Wallet eingebettet ist und eingerichtet ist, um als Reaktion auf mindestens einen Auslöser, der mit einem Skript einer Blockchain-Transaktion assoziiert ist oder darin bereitgestellt wird, mindestens einen Prozess auszuführen;
wobei die Prozessausführungskomponente ein Interpreter ist und/oder einen Interpreter beinhaltet, der eingerichtet ist, um kodierte Anweisungen, die durch den Auslöser bereitgestellt oder dargestellt werden, in ausführbare Logik zu übersetzen;
wobei das Skript mit einem Output der Blockchain-Transaktion assoziiert ist und das Ausgeben des Outputs einen Transfer eines Tokens und/oder eines Währungsanteils an einen Empfänger auf der Blockchain bewirkt; und
wobei der mindestens eine Auslöser das Senden eines Signals an eine blockferne Zieladresse bewirkt, um zusätzlich zu dem Transfer des Tokens und/oder des Währungsanteils das Ausführen eines blockfernen Ereignisses zu bewirken.

10. Verfahren gemäß Anspruch 9, wobei:
i) der mindestens eine Auslöser eingerichtet ist, um die Ausführung des einen oder der mehreren Prozesse durch die Prozessausführungskomponente zu initiieren;
ii) der mindestens eine Auslöser ein oder mehrere Codes, Anweisungen, Flags und/oder Parameter beinhaltet.

11. Verfahren gemäß Anspruch 9 oder 10, wobei:
i) der Prozess vorgegeben und der Prozessausführungskomponente und/oder dem Wallet bekannt ist;
ii) der Prozess durch das Skript festgelegt oder spezifiziert wird, wobei die Prozessausführungskomponente vorzugsweise eingerichtet ist, um ein oder mehrere Elemente innerhalb des Skripts in ausführbare Logik zu übersetzen oder zu interpretieren;
iii) der mindestens eine Auslöser und/oder der mindestens eine Prozess gemäß einem Vertrag ausgewählt oder festgelegt wird, wobei der Vertrag vorzugsweise ein Smart Contract ist;
iv) der mindestens eine Auslöser innerhalb von oder durch Metadaten, die innerhalb des Skripts bereitgestellt werden, bereitgestellt wird.

12. Verfahren gemäß den Ansprüchen 9 bis 11, das ferner den folgenden Schritt beinhaltet:
Herunterladen und/oder Installieren des digitalen Wallets; und/oder
Herunterladen und/oder Installieren der Prozessausführungskomponente.

## Revendications

1. Un système mis en œuvre par chaîne de blocs comprenant :
un portefeuille numérique ; et
un composant d'exécution de processus incorporé au sein du portefeuille numérique et conçu pour exécuter et/ou lancer au moins un processus en réponse à au moins un déclencheur fourni dans un script associé à une transaction par chaîne de blocs ;
où le composant d'exécution de processus est et/ou comprend un interpréteur conçu pour traduire des instructions codifiées fournies par ou représentées par le déclencheur en logique exécutable ;
où le script est associé à une sortie de la transaction par chaîne de blocs, et la dépense de la sortie provoque le transfert d'un jeton et/ou d'un montant de monnaie à un bénéficiaire sur la chaîne de blocs ;
où l'au moins un déclencheur amène un signal à être envoyé à une destination hors bloc afin d'amener un événement hors bloc à être exécuté en plus du transfert du jeton et/ou du montant de monnaie.

2. Le système selon la revendication 1 où :
le portefeuille est un portefeuille de cryptomonnaie.

3. Le système selon la revendication 1 ou la revendication 2 où :
l'au moins un déclencheur comprend un(e) ou plusieurs codes, drapeaux, instructions et/ou paramètres.

4. Le système selon n'importe quelle revendication précédente où :
le processus est prédéterminé et connu du composant d'exécution de processus et/ou du portefeuille.

5. Le système selon n'importe quelle revendication précédente où :
le processus est déterminé par le script, ou spécifié au sein de celui-ci, de préférence où le composant d'exécution de processus est conçu pour traduire ou interpréter un ou plusieurs éléments au sein du script en logique exécutable.

6. Le système selon n'importe quelle revendication précédente où :
l'au moins un déclencheur et/ou l'au moins un processus est sélectionné ou déterminé conformément à un contrat, de préférence où le contrat est un contrat intelligent.

7. Le système selon n'importe quelle revendication précédente où :
l'au moins un déclencheur est fourni au sein de ou par des métadonnées qui sont fournies par le script.

8. Le système selon n'importe quelle revendication précédente où :
le système comprend en outre une pluralité de portefeuilles numériques et/ou de composants d'exécution de processus.

9. Un procédé mis en œuvre par chaîne de blocs comprenant l'étape :
de fourniture d'un composant d'exécution de processus incorporé au sein d'un portefeuille de cryptomonnaie ou numérique et conçu pour exécuter au moins un processus en réponse à au moins un déclencheur associé à ou fourni dans un script d'une transaction par chaîne de blocs ;
où le composant d'exécution de processus est et/ou comprend un interpréteur conçu pour traduire des instructions codifiées fournies par ou représentées par le déclencheur en logique exécutable ;
où le script est associé à une sortie de la transaction par chaîne de blocs, et la dépense de la sortie provoque le transfert d'un jeton et/ou d'un montant de monnaie à un bénéficiaire sur la chaîne de blocs ; et
où l'au moins un déclencheur amène un signal à être envoyé à une destination hors bloc afin d'amener un événement hors bloc à être exécuté en plus du transfert du jeton et/ou du montant de monnaie.

10. Le procédé selon la revendication 9 où :
i) l'au moins un déclencheur est conçu pour lancer l'exécution des un ou plusieurs processus par le composant d'exécution de processus ;
ii) l'au moins un déclencheur comprend un(e) ou plusieurs codes, instructions, drapeaux et/ou paramètres.

11. Le procédé selon la revendication 9 ou la revendication 10 où :
i) le processus est prédéterminé et connu du composant d'exécution de processus et/ou du portefeuille ;
ii) le processus est déterminé par le script, ou spécifié au sein de celui-ci, de préférence où le composant d'exécution de processus est conçu pour traduire ou interpréter un ou plusieurs éléments au sein du script en logique exécutable ;
iii) l'au moins un déclencheur et/ou l'au moins un processus est sélectionné ou déterminé conformément à un contrat, de préférence un contrat intelligent ;
iv) l'au moins un déclencheur est fourni au sein de ou par des métadonnées qui sont fournies au sein du script.

12. Le procédé selon les revendications 9 à 11 et comprenant en outre l'étape :
de téléchargement et/ou d'installation du portefeuille numérique ; et/ou
de téléchargement et/ou d'installation du composant d'exécution de processus.
